# EUROPEAN PATENT APPLICATION

(11) **EP 3 037 500 A1**
(43) Date of publication of application: **29.06.2016**
(21) Application number: 15164312.9
(22) Date of filing: 20.04.2015
(51) Int. Cl.: C09K 17/40, C05D 9/00

(54) **MIXTURE OF WASTE FOR IMPROVEMENT OF LIGHT SOIL PROPERTIES AND IMPROVEMENT OF ITS PRODUCTIVE PROPERTIES**

(30) Priority: 22.12.2014 PL 41074414
(71) Applicant: Politechnika Lubelska, 20-618 Lublin (PL); Uniwersytet Przyrodniczy, 20-950 Lublin (PL)
(72) Inventor: Baran, Stanis aw, 20-448 Lublin (PL); Pawlowski, Lucjan, 20-710 Lublin (PL); Wesolowski, Marian, 20-807 Lublin (PL); Pawlowski, Artur, 20-710 Lublin (PL); Kwiatkowski, Zygmunt, 21-003 Ciecierzyn (PL); Pawlowska, Malgorzata, 20-710 Lublin (PL); Zukowska, Grazyna, 20-282 Lublin (PL); Bik-Malodzinska, Marta, 39-340 Padlew Narodowa (PL)
(74) Representative: Kaminski, Piotr

(57) **Abstract**

A mixture of waste intended for the improvement of light soil properties and the properties of its production, comprising waste obtained through hydro-segregation of quartz sand and municipal sewage sludge, stabilized through sludge fermentation in municipal wastewater treatment plant.

## Description

The object of the present invention is a mixture of waste for the improvement of light soil properties and the properties of its production.

Hydro-segregation of sand from the Niemce - Rokitno II mine yields all the expected fractions for various economic purposes, in addition to mineral waste, coded 01 04 12. This waste is used for backfilling of sand mines. Its beneficial physical, physicochemical and chemical properties inspired the search for a new method of its application. When mixed with other types of waste in a composite, it can be used to improve the production properties of poor-quality light soil.

The highly-effective process of sandblasting employed in industry requires specially prepared fractions of quartz sand. Separating these fractions from sand formation is done through hydro-segregation. This process precipitates mineral waste, coded 01 04 12. Its application is solely limited to backfilling of the post-exploitation excavations. Thus far, the research results showed that it is characterized by beneficial physical, physicochemical and chemical properties. The waste is classified as clay loam with 33% loam and 30% silt content, which significantly improves its properties in comparison to normal sand. The sorption capacity of this material is three times greater than the one of normal sand, four times greater than in case of exchangeable base cations, including - five times in case of Ca, and three times in relation to Mg and K. The complete form content is also better: P - fourfold, K - sixfold, Mg - sevenfold, while for assimilable forms: P - sixfold, K - fivefold, Mg - fourfold. Increase of heavy metal content is low, and in some cases, e.g. Cu and Zn - very beneficial. Such positive properties of the considered waste are best used for the improvement of light soil properties. Taking into account the mineral nature of this waste, the improvement will be permanent. However, addition of organic substance is necessary to further improve fertilized/meliorated soil. It will increase the bonitation of light soil, and thus the quality and quantity of plant's biomass. Such actions are in line with the principles of sustainable development, as the material taken from the environment is returned, improving the production properties (author's own research - results not published)

The essence of the mixture for the improvement of light soil properties and the properties of its production is that the waste obtained in the process of hydro-segregation of quartz sand and stabilized municipal sewage sludge, comprises 33% of loam, 30% silt fraction; pH of 6.9 in 1-mole KCl solution; sorption capacity of 16.8 cmol(+)/kg; total base cations of 16.05 cmol(+)/kg and the saturation of the sorption complex with base cations equal to 97% in the amount of 200-400 Mg/ha, as well as stabilized municipal sewage sludge with pH of 6.2 in 1-mole KCl solution, sorption capacity of 33.9 cmol(+)/kg; total base cations of 29.6 cmol(+)/kg; saturation of the sorption complex with base cations equal to 87%, carbon content of 210.8 g/kg; with the relation of carbon - Cₜₒₜ to nitrogen - Nₜₒₜ amounting to 7.2 in 10Mg/ha of dry mass.

Advantages of using the invented mixture include: 50-65% reduction of acidification in the fertilized acidic light soil, 176-248% improvement of sorption capacity and 361-528% greater base cation content. Implementation of the afore-mentioned waste is conducive to the reproduction of organic matter in soil, proportional to the amount of mineral waste. Optimization of these properties improves water retention in soil, share of lumpy structure and aeration. Soil becomes more resistant to such destructive factors as: impact of chemicals, acidification and wind erosion. By improving the chemical and physicochemical properties of light soil, biomass of plant crops increases by 275-369%. Rational, sustainable use of the afore-mentioned waste is an additional advantage.

Possible applications of the invented mixture were presented in the examples below.

Example 1. Mixture comprising: waste obtained through hydro-segregation of quartz sand containing 33% of loam; 30% of silt fraction; pH of 6.9 in 1-mole KCl solution; sorption capacity of 16.8 cmol(+)/kg; total base cations of 16.05 cmol(+)/kg and the saturation of the sorption complex with base cations equal to 97% in the amount of 200 Mg/ha, as well as stabilized municipal sewage sludge with pH amounting to 6.2 in 1-mole KCl solution, sorption capacity of 33.9 cmol(+)/kg; total base cations of 29.6 cmol(+)/kg; saturation of the sorption complex with base cations equal to 87%, carbon content of 210.8 g/kg; with the relation of carbon - Cₜₒₜ to nitrogen - Nₜₒₜ amounting to 7.2 in 10Mg/ha of dry mass. The mixture was distributed by means of manure spreader over the area of 1 ha, and then mixed with soil through medium plowing coupled with harrowing prior to sowing. White mustard was used as cover crops.

Example 2. Mixture comprising: waste obtained through hydro-segregation of quartz sand containing 33% of loam; 30% of silt fraction; pH of 6.9 in 1-mole KCl solution; sorption capacity of 16.8 cmol(+)/kg; total base cations of 16.05 cmol(+)/kg and the saturation of the sorption complex with base cations equal to 97% in the amount of 300 Mg/ha as well as stabilized municipal sewage sludge with pH amounting to 6.2 in 1-mole KCl solution, sorption capacity of 33.9 cmol(+)/kg; total base cations of 29.6 cmol(+)/kg; saturation of the sorption complex with base cations equal to 87%, carbon content of 210.8 g/kg; with the relation of carbon - Cₜₒₜ to nitrogen - Nₜₒₜ amounting to 7.2 in 10Mg/ha of dry mass. The mixture was distributed by means of manure spreader over the area of 1 ha, and then mixed with soil through medium plowing coupled with harrowing prior to sowing. White mustard was used as cover crops.

Example 3. Mixture comprising: waste obtained through hydro-segregation of quartz sand containing 33% of loam; 30% of silt fraction; pH of 6.9 in 1-mole KCl solution; sorption capacity of 16.8 cmol(+)/kg; total base cations of 16.05 cmol(+)/kg and the saturation of the sorption complex with base cations equal to 97% in the amount of 400 Mg/ha as well as stabilized municipal sewage sludge with pH amounting to 6.2 in 1-mole KCl solution, sorption capacity of 33.9 cmol(+)/kg; total base cations of 29.6 cmol(+)/kg; saturation of the sorption complex with base cations equal to 87%, carbon content of 210.8 g/kg; with the relation of carbon - Cₜₒₜ to nitrogen - Nₜₒₜ amounting to 7.2 in 10Mg/ha of dry mass. The mixture was distributed by means of manure spreader over the area of 1 ha, and then mixed with soil through medium plowing coupled with harrowing prior to sowing. White mustard was used as cover crops.

## Claims

1. mixture of waste intended for the improvement of light soil properties and its productive properties, comprising waste obtained through hydro-segregation of quartz sand and municipal sewage sludge, which was stabilized by sludge fermentation in municipal wastewater treatment plant, **characterized in that** it consists of the waste from hydro-segregation of quartz sand containing 33% of loam; 30% of silt fraction; pH of 6.9 in 1-mole KCl solution; sorption capacity of 16.8 cmol(+)/kg; total base cations of 16.05 cmol(+)/kg and the saturation of the sorption complex with base cations equal to 97% in the amount of 200-400 Mg/ha, as well as stabilized municipal sewage sludge with pH amounting to 6.2 in 1-mole KCl solution, sorption capacity of 33.9 cmol(+)/kg; total base cations of 29.6 cmol(+)/kg; saturation of the sorption complex with base cations equal to 87%, carbon content of 210.8 g/kg; with the relation of carbon - Cₜₒₜ to nitrogen - Nₜₒₜ amounting to 7.2 in 10Mg/ha of dry mass.
